# EUROPÄISCHE PATENTSCHRIFT

(11) **EP 2 834 392 B1**
(45) Veröffentlichungstag und Bekanntmachung des Hinweises auf die Patenterteilung: **13.02.2019**
(21) Anmeldenummer: 13718087.3
(22) Anmeldetag: 13.03.2013
(51) Int. Cl.: C23C 22/20, C04B 28/34, C09D 5/10, C09D 5/12, C23C 22/22, C23C 22/74, F01D 5/28, C23C 10/18, C23C 10/30, C23C 10/58

(54) **CR(VI)- FREIE KORROSIONSSCHUTZSCHICHTEN ODER HAFTSCHICHTEN MIT EINER LÖSUNG, DIE PHOSPHAT-IONEN UND METALLPULVER UMFASST, WOBEI DAS METALLPULVER ZUMINDEST TEILWEISE MIT SI ODER SI-LEGIERUNGEN BESCHICHTET IST.**
CR (VI)-FREE ANTI-CORROSION LAYERS OR ADHESIVE LAYERS WHICH CONTAIN A SOLUTION COMPRISING PHOSPHATE IONS AND METAL POWDER, THE METAL POWDER BEING AT LEAST PARTIALLY COATED WITH SI OR SI ALLOYS
COUCHES DE PROTECTION ANTICORROSION ET/OU ADHÉSIVES EXEMPTES DE CR (VI) COMPRENANT UNE SOLUTION CONTENANT DES IONS PHOSPHATE ET UNE POUDRE MÉTALLIQUE, LAQUELLE POUDRE MÉTALLIQUE ÉTANT AU MOINS PARTIELLEMENT REVÊTUE DE SI OU D'ALLIAGES DE SI

(30) Priorität: 03.04.2012 DE 102012006656
(43) Veröffentlichungstag der Anmeldung: 11.02.2015
(73) Patentinhaber: MTU Aero Engines GmbH, 80995 München (DE)
(72) Erfinder: STAPEL, Martin, 80636 München (DE); LOPEZ LAVERNIA, Natividad, 80995 München (DE); NIEGL, Max, 81247 München (DE); MORANT, Max, 83229 Aschau (DE)
(86) Internationale Anmeldenummer: PCT/DE2013/000142
(87) Internationale Veröffentlichungsnummer: WO 2013/149606

(56) Entgegenhaltungen:
- EP-A1- 0 933 446
- EP-A1- 1 700 929
- EP-A1- 1 700 930
- WO-A1-2005/052211
- US-A1- 2002 017 164

## Beschreibung

### GEBIET DER ERFINDUNG

Die vorliegende Erfindung betrifft einen Beschichtungsstoff sowie ein Verfahren zur Herstellung einer Korrosionsschutz - und/oder Haftvermittlerschicht.

### STAND DER TECHNIK

Bei metallischen Bauteilen, die hohen Temperaturen und/oder korrosiven Medien ausgesetzt sind, wie beispielsweise Komponenten von Strömungsmaschinen in Form von stationären Gasturbinen oder Flugtriebwerken, müssen die metallischen Oberflächen vor Oxidations- und/oder Korrosionsangriff geschützt werden. Hierzu sind im Stand der Technik eine Vielzahl unterschiedlicher Schichtsysteme bekannt.

Unter anderem werden auch Phosphatschichten eingesetzt, bei denen durch eine Lösung, die Phosphat - Ionen enthält, schwer lösliche Phosphate an der zu schützenden Metalloberfläche ausgefällt werden, so dass eine Schutzschicht entsteht, die fest mit dem zu schützenden metallischen Werkstoff verbunden ist und von daher auch als Haftvermittlerschicht für zusätzliche auf der Phosphatschicht angeordnete Schutzschichten dienen kann.

Bei dieser Art der Beschichtung der metallischen Oberfläche können zusätzlich Metall - Kationen aus der Phosphatlösung zum Schichtaufbau beitragen und eine Korrosionsschutzwirkung bereitstellen. Beispielsweise können Aluminiumionen bzw. Aluminiumpartikel in der Phosphatlösung vorgesehen sein, um eine Aluminiumanreicherung in der zu bildenden Korrosionsschutz -und/ oder Haftvermittlerschicht auf Phosphat - Basis zu erzielen, wobei das Aluminium durch Bildung einer langsam wachsenden Aluminiumoxidschicht zum Korrosionsschutz beitragen kann. Ein Beispiel für einen derartigen Beschichtungsstoff ist in der US-Patentschrift US 3,248,251 gegeben.

Ein derartiger Beschichtungsstoff enthält üblicherweise zusätzlich Chromate um eine Stabilisierung der Phosphatlösung zu ermöglichen. Ansonsten kann es insbesondere bei der Anwesenheit von metallischen Partikeln, wie beispielsweise Aluminiumpulver in der Phosphatlösung zu Reaktionen der Phosphorsäure mit dem Metallpulver bzw. Aluminiumpulver kommen. Allerdings sind Chromate und insbesondere Chrom(VI) - Ionen giftig und gesundheitsgefährdend, so dass bereits Anstrengungen unternommen worden sind, Chromate aus derartigen Beschichtungsstoffen zu entfernen. Ein Beispiel ist in der US 6,368,394 B1 gegeben, in welcher eine Beschichtungszusammensetzung vorgeschlagen wird, die Wasser, Phosphat - Ionen, Borat - Ionen und Aluminium - Ionen umfasst und einen PH - Wert im Bereich von 1,4 bis 2,2 aufweist. Aus der US 2002/017164 A1 ist ein chromfreies Verfahren zur Herstellung einer Korrosionsschutzschicht direkt auf eine metallisches Substrat bekannt.

Aus der WO 2005/052211A1 ist ein Verfahren zur Herstellung einer korrosionsbeständigen und oxidationsbeständigen Beschichtung bekannt, bei dem der verwendete Schlickerwerkstoff neben einem Bindemittel zumindest ein Metallpulver enthält, welches zu zumindest 25 Gew. % aus mindestens einem Metall der Platin-Gruppe besteht.

Aus der EP 1 700 930 A1 und der EP 1 700 929 A1 sind weitere aluminiumhaltige Korrosionsschutzschichten sowie deren Herstellungsverfahren bekannt.

Die EP 0 933 446 A1 offenbart eine chrom- und molybdänionenfreie, phosphat- und permanganathaltige Schutzschicht.

Gleichwohl besteht weiterhin ein Bedarf, einen Beschichtungsstoff für ein Verfahren zur Herstellung einer Korrosionsschutz - und/oder Haftvermittlerschicht auf Phosphatbasis sowie ein entsprechendes Verfahren bereitzustellen, bei welchen sowohl einerseits die Stabilität des Beschichtungsstoffes für die Beschichtung auf Phosphatbasis gewährleistet wird und andererseits zudem eine wirksame und effektive Schichtbildung auf dem zu schützenden metallischen Bauteil erzielt wird.

### OFFENBARUNG DER ERFINDUNG

### AUFGABE DER ERFINDUNG

Es ist deshalb Aufgabe der vorliegenden Erfindung eine Zusammensetzung bzw. einen Beschichtungsstoff und ein Verfahren zur Herstellung einer Korrosionsschutz - und/oder Haftvermittlerschicht bereitzustellen, bei welchen die oben genannten Anforderungen erfüllt werden. Insbesondere soll eine Zusammensetzung bzw. ein Beschichtungsstoff zur Behandlung einer metallischen Oberfläche bereitgestellt werden, der Phosphat - Ionen in einer Lösung umfasst, um als Binder zu wirken, wobei zusätzlich Metallpartikel enthalten sein sollen, die jedoch ohne Zusatz von Chrom(VI) - Ionen stabil in der Phosphatlösung aufgenommen sein sollen. Darüber hinaus soll ein Verfahren zur Herstellung einer Korrosionsschutz -und/oder Haftvermittlerschicht unter Verwendung einer Zusammensetzung auf Phosphatbasis bereit gestellt werden, welches eine zuverlässige und effektive Herstellung entsprechender Korrosionsschutz -und/oder Haftvermittlerschichten ermöglicht.

### TECHNISCHE LÖSUNG

Diese Aufgabe wird gelöst durch einen Beschichtungsstoff mit den Merkmalen des Anspruchs 1 sowie einem Verfahren zur Herstellung einer Korrosionsschutz - und/oder Haftvermittlerschicht mit den Merkmalen des Anspruchs 7. Vorteilhafte Ausgestaltungen sind Gegenstand der abhängigen Ansprüche.

Die Erfindung schlägt nach einem ersten Aspekt vor, einen Beschichtungsstoff bereitzustellen, bei dem die Stabilität der Beschichtungsstoff - Zusammensetzung und insbesondere der metallischen Anteile, wie beispielsweise von Aluminiumanteilen dadurch erhöht wird, dass ein Metallpulver und insbesondere ein Aluminium - haltiges Pulver in dem Beschichtungsstoff eingesetzt wird, das zumindest teilweise mit Silizium oder einer Si - Legierung beschichtet ist.

Das Metallpulver kann insbesondere ein Aluminium - haltiges Pulver sein, so dass Aluminium in die Korrosionsschutz - und/oder Haftvermittlerschicht eingebaut wird, um dadurch die Korrosionsbeständigkeit zu verbessern.

Die mit Silizium beschichteten Aluminium - haltigen Pulverpartikel können bezüglich des Aluminiumkerns reine Aluminiumpartikel im Sinne eines technisch reinen Aluminiums oder Aluminiumlegierungspartikel sein. Die mit Silizium beschichteten Aluminiumpulverpartikel können bezüglich des Aluminiumkerns identisch zu den weiteren, Aluminium -haltigen Pulverpartikeln der Beschichtungsstoff - Zusammensetzung sein oder sich von diesen in Größe, Form und Zusammensetzung unterscheiden. Dies gilt entsprechend auch für Metallpulver, die aus anderen Metallen als Aluminium oder aus Metalllegierungen bestehen, die keine Al - Legierungen sind.

Das im Beschichtungsstoff enthaltene Metallpulver kann zu 60% bis 99% Aluminiumpulver, insbesondere zu 70% bis 80%, vorzugsweise zu 75% Aluminiumpulver sein, während der Rest des Metallpulvers mit Silizium beschichtetes Aluminiumpulver sein kann. Die Prozentangaben können sich hierbei sowohl auf Gewichtsprozent als auch auf Volumenprozent beziehen, wobei die entsprechenden Anteile von unbeschichtetem Metallpulver zu beschichtetem Metallpulver auch für Metallpulver aus anderen Metallen als Aluminium oder anderen Legierungen als Al - Legierungen gilt.

Das Bindemittel in Form der Phosphat - Ionen enthaltenden Lösung kann 1 bis 10 % Magnesiumphosphat, 1 bis 10 % Aluminiumphosphat und 80 bis 90 % Phosphorsäure umfassen, wobei sich die Prozentangaben wiederum auf Volumenprozent oder Gewichtsprozent beziehen können.

Bei einem derartigen Bindemittel rein auf Phosphatbasis kann als Metallpulver auch reines Aluminiumpulver verwendet werden, so dass hierfür nach einem weiteren Aspekt der Erfindung unabhängig und selbstständig Schutz begehrt wird.

Das Mischungsverhältnis zwischen Metallpulver und Bindemittel kann so gewählt werden, dass auf 10 Gewichtsanteile Bindemittel 5 bis 10, insbesondere 6 bis 8 Gewichtsanteile Metallpulver kommen.

Gemäß einem weiteren Aspekt der vorliegenden Erfindung, für den unabhängig und in Kombination mit anderen Aspekten der Erfindung Schutz begehrt wird, wird ein Verfahren zur Herstellung einer Korrosionsschutz -und/oder Haftvermittlerschicht vorgeschlagen, bei welchem ein Beschichtungsstoff, wie oben beschrieben, eingesetzt wird. Der entsprechende Beschichtungsstoff wird beispielsweise durch Streichen, Eintauchen des entsprechenden Bauteils in den Beschichtungsstoff oder durch Spritzen des Beschichtungsstoffs auf die Bauteilfläche aufgetragen, an der die Korrosionsschutz -und/oder Haftvermittlerschicht erzeugt werden soll. Die so mit Beschichtungsstoff behandelte oder versehene Bauteilfläche wird einer Wärmebehandlung bei einer ersten Temperatur unterzogen, um den Beschichtungsstoff zu trocknen und/oder auszuhärten bzw. die Phosphate zu polymerisieren. Danach kann eine weitere Wärmebehandlung bei einer zweiten Temperatur, die höher ist als die erste Temperatur, erfolgen.

Die erste Temperatur kann beispielsweise im Bereich von 250°C bis 400°C, vorzugsweise 300°C bis 350°C gewählt werden, während die zweite Temperatur im Bereich von 500°C bis 600°C, vorzugsweise 550°C bis 570°C gewählt werden kann.

Vor dem Aufbringen des Beschichtungsstoffes auf die zu behandelnde Bauteiloberfläche kann diese mit Partikel gestrahlt werden, um eine metallische und saubere Oberfläche zu erhalten, wobei insbesondere Aluminiumoxidpartikel zum Einsatz kommen können.

Der Beschichtungsstoff kann unmittelbar vor der Anwendung durch Mischen der Pulverpartikel mit der die Phosphat - Ionen enthaltenden Lösung hergestellt werden, um so die Wirksamkeit und Effektivität der Phosphat - Ionen für die Behandlung der zu beschichtenden, metallischen Oberfläche zu erhalten.

Die erzeugte Schicht kann nach der Durchführung der ersten und/oder zweiten Wärmebehandlung versiegelt- und/oder verdichtet werden.

Die entsprechende Beschichtung bzw. Behandlung kann insbesondere bei Bauteilen aus Stahl vorgesehen werden, die eine Einsatztemperatur von bis zu 600°C aufweisen können. Neben der Beschichtung von Stahl können auch andere metallische Werkstoffe, wie z.B. Nickelbasislegierungen beschichtet werden, insbesondere wenn die Schicht als Grundschicht ("bond coat") für thermische Spritzschichten oder Klebstoffe eingesetzt wird und/oder die Bauteile für Betriebstemperaturen unter 600° eingesetzt werden.

### AUSFÜHRUNGSBEISPIEL

Eine Chrom(VI) - freie Zusammensetzung nach einem Ausführungsbeispiel umfasst 75 Gew.-% Aluminiumpulverpartikel und 25 Gew.-% mit Silizium beschichtete Aluminiumpulverpartikel. Diese werden in eine Phosphat - Ionen enthaltende Lösung dispergiert, so dass die Phosphat - Ionen enthaltende Lösung als Bindemittel dient. Es kann aber auch reines AL-Pulver verwendet werden.

Ein derartiger Beschichtungsstoff wird auf einer mit Aluminiumoxidpartikeln gestrahlten Oberfläche aufgespritzt oder gepinselt und zur Trocknung und/oder Aushärtung bei ca. 320°C solange temperiert, bis der Binder getrocknet und/oder gehärtet ist und die schwerlöslichen Phosphate polymerisiert sind.
Danach kann eine weitere Wärmebehandlung bei einer Temperatur von 560°C durchgeführt werden und eine entsprechende hergestellte Schicht kann zusätzlich versiegelt und/oder verdichtet werden. Darüber hinaus kann auf der entsprechend erzeugten Schicht eine weitere Korrosions- und/oder Oxidationsschutzschicht aufgebracht werden, beispielsweise in Form einer thermischen Spritzschicht. Entsprechend kann die gemäß der vorliegenden Erfindung erzeugte Schicht als Grundschicht ("bond coat") für thermische Spritzschichten eingesetzt werden. Falls die Schicht als Grundschicht ("Bond coat") für thermische Spritzschichten oder für Klebstoffe verwendet wird, können Bauteile aus beliebigen Legierungen (wie z.B. Ni - Basis - Legierungen) verwendet werden. Die Bauteiltemperatur muss dann aber bei oder unter 600 °C (Betriebstemperatur) bleiben.
Obwohl die vorliegende Erfindung bezüglich des Ausführungsbeispiels detailliert beschrieben worden ist, ist die Erfindung nicht auf dieses Ausführungsbeispiel beschränkt, sondern kann Abwandlungen, wie beispielsweise das Weglassen einzelner Merkmale oder die Kombination unterschiedlicher Merkmale umfassen, solange der Schutzbereich der beigefügten Ansprüche nicht verlassen wird.

## Patentansprüche

1. Beschichtungsstoff zur Herstellung einer Korrosionsschutz - und/oder Haftvermittlerschicht, der Metallpulver und eine Phosphat - Ionen enthaltende Lösung als Bindemittel umfasst,
**dadurch gekennzeichnet, dass**
das Metallpulver zumindest teilweise mit Si oder Si - Legierungen beschichtet ist, wobei das Metallpulver Al - Pulver und mit Si beschichtetes Al - Pulver mit Anteilen von 60 % bis 99 % Al - Pulver und 1 % bis 40 % mit Si beschichtetes Al - Pulver aufweist, wobei die Prozentangaben sich hierbei sowohl auf Gewichtsprozent als auch auf Volumenprozent beziehen können.

2. Beschichtungsstoff nach Anspruch 1,
**dadurch gekennzeichnet, dass**
das Metallpulver Al - haltiges Pulver umfasst, welches technisch reines Aluminium oder Al - Legierungen umfasst.

3. Beschichtungsstoff nach Anspruch 1 oder 2,
**dadurch gekennzeichnet, dass**
das Metallpulver Al - Pulver und mit Si beschichtetes Al - Pulver mit Anteilen von 65 % bis 90 % Al - Pulver, vorzugsweise 70 % bis 80 % Al - Pulver und 10 % bis 35 %, vorzugsweise 20 % bis 30 % mit Si beschichtetes Al - Pulver aufweist, wobei die Prozentangaben sich hierbei sowohl auf Gewichtsprozent als auch auf Volumenprozent beziehen können.

4. Beschichtungsstoff nach Anspruch 1,
**dadurch gekennzeichnet, dass**
das Metallpulver Al - haltiges Pulver umfasst, welches technisch reines Aluminium oder Al - Legierungen umfasst, und das Bindemittel aus Phosphorsäure und Metallphosphaten besteht und im Wesentlichen frei von Chromaten ist, wobei das Metallpulver mit Si beschichtetes Al - Pulver mit Anteilen von 60 % bis 99 % Al - Pulver und 1 % bis 40 % mit Si beschichtetes Al - Pulver aufweist, wobei die Prozentangaben sich hierbei sowohl auf Gewichtsprozent als auch auf Volumenprozent beziehen können.

5. Beschichtungsstoff nach einem der vorhergehenden Ansprüche,
**dadurch gekennzeichnet, dass**
das Bindemittel 1 bis 10 % Magnesiumphosphat, 1 bis 10 % Aluminiumphosphat und 80 bis 90 % Phosphorsäure aufweist, wobei die Prozentangaben sich hierbei sowohl auf Gewichtsprozent als auch auf Volumenprozent beziehen können.

6. Beschichtungsstoff nach einem der vorhergehenden Ansprüche,
**dadurch gekennzeichnet, dass**
Mischungsverhältnis zwischen Metallpulver und Bindemittel so gewählt ist, dass auf 10 Gewichtsanteile Bindemittel 5 bis 10, insbesondere 6 bis 8 Gewichtsanteile Metallpulver kommen.

7. Verfahren zur Herstellung einer Korrosionsschutz - und/oder Haftvermittlerschicht, welches die folgenden Schritte aufweist:
Bereitstellung eines Beschichtungsstoffes nach einem der vorhergehenden Ansprüche, Auftragen des Beschichtungsstoffes auf einer Bauteilfläche, an der die Korrosionsschutz - und/oder Haftvermittlerschicht erzeugt werden soll,
Trocknung und/oder Aushärtung mit einer Wärmebehandlung bei einer ersten Temperatur.

8. Verfahren nach Anspruch 7,
**dadurch gekennzeichnet, dass**
vor dem Auftragen des Beschichtungsstoffes die zu behandelnde Oberfläche mit Partikeln gestrahlt wird.

9. Verfahren nach Anspruch 8,
**dadurch gekennzeichnet, dass**
die Partikel Aluminiumoxid - Partikel sind.

10. Verfahren nach einem der Ansprüche 7 bis 9,
**dadurch gekennzeichnet, dass**
die erste Temperatur im Bereich von 250°C bis 400°C, vorzugsweise 300°C bis 350°C gewählt wird.

11. Verfahren nach einem der Ansprüche 7 bis 10,
**dadurch gekennzeichnet, dass**
eine weitere Wärmebehandlung bei einer zweiten Temperatur im Bereich von 500°C bis 600°C, vorzugsweise 550°C bis 570°C durchgeführt wird.

12. Verfahren nach einem der Ansprüche 7 bis 11,
**dadurch gekennzeichnet, dass**
der Beschichtungsstoff unmittelbar vor der Anwendung durch Mischen der Pulverpartikel mit der Phosphat - Ionen enthaltenden Lösung hergestellt wird.

13. Verfahren nach einem der Ansprüche 7 bis 12,
**dadurch gekennzeichnet, dass**
nach der oder den Wärmebehandlungen die erzeugte Schicht versiegelt und/oder verdichtet wird.

14. Verfahren nach einem der Ansprüche 7 bis 13,
**dadurch gekennzeichnet, dass**
es bei der Beschichtung von Stahl, insbesondere bei der Beschichtung von Stahlbauteilen von Gasturbinen oder Flugtriebwerken, eingesetzt wird.

## Claims

1. Coating material for producing an anti-corrosion and/or adhesion-promoting layer, which material comprises metal powder and a solution containing phosphate ions as a binder,
**characterized in that**
the metal powder is coated at least in part with Si or Si alloys, the metal powder having Al powder and Al powder coated with Si in proportions of 60% to 99% Al powder and 1% to 40% Al powder coated with Si, it being possible for the percentages in this case to relate to weight percent and to volume percent.

2. Coating material according to claim 1,
**characterized in that**
the metal powder comprises Al-containing powder which comprises commercially pure aluminum or Al alloys.

3. Coating material according to either claim 1 or claim 2,
**characterized in that**
the metal powder has Al powder and Al powder coated with Si in proportions of 65% to 90% Al powder, preferably 70% to 80% Al powder, and 10% to 35%, preferably 20% to 30%, Al powder coated with Si, it being possible for the percentages in this case to relate to weight percent and to volume percent.

4. Coating material according to claim 1,
**characterized in that**
the metal powder comprises Al-containing powder which comprises commercially pure aluminum or Al alloys, and the binder consists of phosphoric acid and metal phosphates and is substantially free of chromates, the metal powder having Al powder coated with Si in proportions of 60% to 99% Al powder and 1% to 40% Al powder coated with Si, it being possible for the percentages in this case to relate to weight percent and to volume percent.

5. Coating material according to any of the preceding claims,
**characterized in that**
the binder has 1 to 10% magnesium phosphate, 1 to 10% aluminum phosphate and 80 to 90% phosphoric acid, it being possible for the percentages in this case to relate to weight percent and to volume percent.

6. Coating material according to any of the preceding claims,
**characterized in that**
a mixing ratio between metal powder and binder is selected in such a way that for 10 parts by weight of binder there are 5 to 10, in particular 6 to 8, parts by weight of metal powder.

7. Method for producing an anti-corrosion and/or adhesion-promoting layer, having the following steps:
providing a coating material according to any of the preceding claims,
applying the coating material to a component surface on which the anti-corrosion and/or adhesion-promoting layer is intended to be produced,
drying and/or hardening using heat treatment at a first temperature.

8. Method according to claim 7,
**characterized in that**,
before applying the coating material, the surface to be treated is blasted with particles.

9. Method according to claim 8,
**characterized in that**
the particles are aluminum oxide particles.

10. Method according to any of claims 7 to 9,
**characterized in that**
the first temperature is selected to be in the range of from 250°C to 400°C, preferably 300°C to 350°C.

11. Method according to any of claims 7 to 10,
**characterized in that**
a further heat treatment step is carried out at a second temperature in the range of from 500°C to 600°C, preferably from 550°C to 570°C.

12. Method according to any of claims 7 to 11,
**characterized in that**
the coating material is produced immediately before application by mixing the powder particles with the solution containing phosphate ions.

13. Method according to any of claims 7 to 12,
**characterized in that**,
after the heat treatment step/s, the layer produced is sealed and/or compacted.

14. Method according to any of claims 7 to 13,
**characterized in that**
it is used when coating steel, in particular when coating steel components of gas turbines or aircraft engines.

## Revendications

1. Substance de revêtement pour la fabrication d'une protection anti-corrosion - et/ou couche adhésive, comprenant de la poudre métallique et une solution contenant des ions phosphate en tant que liant,
**caractérisée en ce que**
la poudre métallique est revêtue, au moins partiellement, de Si ou d'alliages de Si, la poudre métallique présentant de la poudre d'Al et de la poudre d'Al revêtue de Si dans des proportions de 60 % à 99 % de poudre d'Al et de 1 % à 40 % de poudre d'Al revêtue de Si, les pourcentages indiqués pouvant se rapporter ici aussi bien au pourcentage en poids qu'au pourcentage en volume.

2. Substance de revêtement selon la revendication 1,
**caractérisée en ce que**
la poudre métallique comprend de la poudre contenant de l'Al, laquelle comprend de l'aluminium techniquement pur ou des alliages d'aluminium.

3. Substance de revêtement selon la revendication 1 ou la revendication 2,
**caractérisée en ce que**
la poudre métallique présente de la poudre d'Al et de la poudre d'Al revêtue de Si dans des proportions de 65 % à 90 % de poudre d'Al, de préférence de 70 % à 80 % de poudre d'Al, et de 10 % à 35 %, de préférence de 20 % à 30 % de poudre d'Al revêtue de Si, les pourcentages indiqués pouvant se rapporter ici aussi bien au pourcentage en poids qu'au pourcentage en volume.

4. Substance de revêtement selon la revendication 1,
**caractérisée en ce que**
la poudre métallique comprend de la poudre contenant de l'Al, laquelle comprend de l'aluminium techniquement pur ou des alliages d'aluminium, et le liant est constitué d'acide phosphorique et de phosphates métalliques et est sensiblement exempt de chromates, la poudre métallique présentant de la poudre d'Al revêtue de Si dans des proportions de 60 % à 99 % de poudre d'Al et de 1 % à 40 % de poudre d'Al revêtue de Si, les pourcentage indiqués pouvant se rapporter ici aussi bien au pourcentage en poids qu'au pourcentage en volume.

5. Substance de revêtement selon l'une des revendications précédentes,
**caractérisée en ce que**
le liant présente de 1 à 10% de phosphate de magnésium, de 1 à 10% de phosphate d'aluminium et de 80 à 90 % d'acide phosphorique, les données de pourcentage pouvant se rapporter ici aussi bien au pourcentage en poids qu'au pourcentage en volume.

6. Substance de revêtement selon l'une des revendications précédentes,
**caractérisée en ce que**
le rapport de mélange entre la poudre métallique et le liant est choisi de sorte que, à 10 proportions en poids de liant, correspondent de 5 à 10, en particulier de 6 à 8 proportions en poids de poudre métallique.

7. Procédé de fabrication d'une protection anti-corrosion - et/ou couche adhésive, présentant les étapes suivantes :
Préparation d'une substance de revêtement selon l'une des revendications précédentes,
Dépôt de la substance de revêtement sur une surface de composant sur laquelle la protection anti-corrosion - et/ou la couche adhésive doit être produite,
Séchage et/ou durcissement avec un traitement thermique à une première température.

8. Procédé selon la revendication 7,
**caractérisé en ce que**
la surface à traiter est irradiée avec des particules avant le dépôt de la substance de revêtement.

9. Procédé selon la revendication 8,
**caractérisé en ce que**
les particules sont des particules d'oxyde d'aluminium.

10. Procédé selon l'une des revendications 7 à 9,
**caractérisé en ce que**
la première température est choisie dans la plage de 250 °C à 400 °C, de préférence de 300 °C à 350 °C.

11. Procédé selon l'une des revendications 7 à 10,
**caractérisé en ce que**
un traitement thermique supplémentaire est réalisé à une seconde température dans la plage de 500 °C à 600 °C, de préférence de 550 °C à 570 °C.

12. Procédé selon l'une des revendications 7 à 11,
**caractérisé en ce que**
la substance de revêtement est fabriquée, immédiatement avant l'utilisation, par le mélange des particules de poudre avec la solution contenant des ions de phosphate.

13. Procédé selon l'une des revendications 7 à 12,
**caractérisé en ce que**
la couche produite est scellée et/ou étanchéifiée après le ou les traitements thermiques.

14. Procédé selon l'une des revendications 7 à 13,
**caractérisé en ce que**
il est utilisé lors du revêtement d'acier, en particulier lors du revêtement de composants d'acier de turbines à gaz ou de moteurs d'avion.
